# FASCICULE DE BREVET EUROPEEN

(11) **EP 1 947 352 B1**
(45) Date de publication et mention de la délivrance du brevet: **03.03.2010**
(21) Numéro de dépôt: 08360001.5
(22) Date de dépôt: 16.01.2008
(51) Int. Cl.: F16B 5/12, B60R 13/04, F16B 2/22

(54) **Clip de fixation à deux positions de maintien et à tête basculante et baguette de carrosserie en comportant**
Clip zum Fixieren in zwei Haltepositionen und mit Schwenkkopf und Karosserieleiste, die ihn umfasst
Attachment clip with two stable positions and tilting head and bodywork rod comprising same

(30) Priorité: 18.01.2007 FR 0700334
(43) Date de publication de la demande: 23.07.2008
(73) Titulaire: Rehau SA, 57340 Morhange (FR)
(72) Inventeur: Leray, Nicolas, 57660 Grening (FR)
(74) Mandataire: Metz, Paul

(56) Documents cités:
- FR-A1- 2 887 598

## Description

La présente invention concerne un clip de fixation à deux positions de maintien et à élément d'accrochage basculant, destiné principalement aux baguettes, moulures, enjoliveurs de ceinture de caisse ou de bas de caisse pour véhicules routiers notamment du type automobile.

L'invention se rapporte également à une baguette de protection ou d'enjolivement ou à tout autre élément à rapporter sur la carrosserie d'un véhicule routier notamment du type automobile, comportant de tels clips de fixation à deux positions.

Les baguettes de protection ou d'enjolivement de ce type sont des pièces en matière plastique réalisées par moulage par injection, conçues pour être montées fixes sur la carrosserie d'un véhicule.

Dans la pratique actuelle, ces baguettes de protection ou d'enjolivement sont peintes après moulage, sur leur lieu de fabrication ou chez un sous-traitant, au moyen d'une ligne spécifique de mise en peinture.

Les baguettes sont alors livrées finies sur le site d'assemblage où elles sont montées sur le support correspondant, généralement la carrosserie d'une voiture, préalablement traité et peint de manière indépendante.

Cette façon de faire est particulièrement onéreuse, car elle nécessite une opération de peinture indépendante de celle du support et une logistique importante pour la mettre en oeuvre et pour fournir, dans le bon ordre, des baguettes de la bonne couleur, au niveau de la chaîne d'assemblage.

En outre, il arrive parfois que, malgré une opération préalable, longue et délicate de mise au point et d'harmonisation des teintes, la baguette et son support, qui sont peints séparément et selon des techniques différentes, présentent de légères variations de teinte. De tels écarts peuvent par exemple provenir de faibles différences d'épaisseur des couches de peinture ou de l'emploi de gammes de peinture spécifiques pas exactement identiques.

Ce désaccord de teinte, minime lorsque les pièces sont regardées séparément, devient très visible lorsqu'elles sont montées l'une sur l'autre. Un tel défaut d'esthétique n'est actuellement plus acceptable par les constructeurs automobiles.

Le but de l'invention est de proposer une baguette de protection, d'enjolivement ou autre qui peut être montée sur la carrosserie avant que cette dernière ne subisse les différentes opérations de traitement et de peinture.

La baguette peut ainsi être traitée et peinte en même temps que la carrosserie sur laquelle elle est montée. Un tel procédé est nettement plus économique, car il supprime la nécessité d'une ligne spécifique supplémentaire de mise en peinture pour les baguettes. De plus, il assure une parfaite harmonie des teintes entre la carrosserie et la baguette.

La baguette est montée sur la carrosserie avant le traitement anti-corrosion de la carrosserie par cataphorèse, ou après ce traitement anti-corrosion mais avant les opérations de mise en peinture de finition (base métallisée ou laque, puis vernis), ces couches de finition étant préférentiellement appliquées par pulvérisation électrostatique de la peinture.

Cependant, pour que cette technique soit envisageable, la baguette ne doit pas gêner par sa présence les différentes opérations de traitement et de peinture de la carrosserie, notamment sur la partie de carrosserie se trouvant à proximité de la baguette ou masquée à l'arrière de celle-ci.

Pour cela, la baguette doit pouvoir être prémontée fixe sur la carrosserie à une certaine distance de celle-ci de manière à ce que la baguette, ainsi que la totalité de la surface de la carrosserie puissent subir les opérations de traitement, notamment la cataphorèse, et être revêtues de peinture, de laque et/ou de vernis dans les zones visibles après fixation définitive de la baguette.

En outre, cette baguette doit pouvoir supporter sans détérioration les conditions parfois sévères de traitement de la carrosserie, la cataphorèse impliquant notamment un passage au four à une température de l'ordre de 200°C.

Elle doit ensuite pouvoir être placée facilement et rapidement en position finale d'utilisation, c'est-à-dire plaquée contre la carrosserie, et s'y maintenir en résistant aux conditions de roulage et aux efforts mécaniques divers auxquels elle peut être exposée par la suite, par exemple le frottement de rouleaux de lavage.

Par la demande FR 2.839.481 au nom d'ARIES, on connaît une baguette destinée à être montée sur la carrosserie d'un véhicule automobile qui répond à ce problème technique. Sur sa face interne, cette baguette comporte d'une part deux organes de prémontage coopérant avec des orifices spécifiques de la carrosserie qui permettent de maintenir la baguette dans une position écartée de son support. Elle comporte d'autre part une série de clips de blocage, coopérant avec un autre type d'orifices de la carrosserie, de manière à assurer la fixation de la baguette en position finale de verrouillage contre la carrosserie après avoir subi une poussée perpendiculaire au support.

Les deux organes de prémontage de cette réalisation antérieure sont formés chacun d'une pièce d'emboîtement préalablement mise en place sur l'orifice correspondant de la carrosserie, et d'une seconde pièce cylindrique rattachée à la baguette, susceptible de coulisser dans la pièce d'emboîtement et comportant en extrémité un ergot destiné à coopérer avec un creux de la pièce d'emboîtement.

Avant les opérations de peinture, on monte cette baguette sur la carrosserie en position écartée. Pour cela, l'opérateur insère la partie cylindrique de chacun des organes de prémontage dans la pièce d'emboîtement correspondante et exerce sur la baguette une poussée perpendiculaire à la carrosserie, dite « en Y » jusqu'à ce que l'ergot des parties cylindriques se bloque dans les creux correspondants des deux pièces d'emboîtement.

Une fois les opérations de peinture terminées, l'opérateur exerce une seconde poussée perpendiculaire à la carrosserie qui provoque la sortie des ergots de prémontage hors de leur logement et l'insertion des clips de blocage dans les orifices correspondants de la carrosserie, de manière à placer la baguette en position finale de verrouillage contre la carrosserie.

Une telle réalisation permet de répondre au problème technique. Cependant, en position écartée de prémontage, la baguette ARIES n'est soutenue sur toute sa longueur qu'à deux endroits correspondant à l'emplacement des organes de prémontage. Ce maintien est assez limité et peut parfois s'avérer insuffisant, par exemple lors du passage dans le bain de cataphorèse où la baguette peut se décrocher du fait des remous engendrés par le déplacement de la voiture dans le bain ou alors dans le four de cataphorèse où la baguette, insuffisamment maintenue, peut s'affaisser entre les deux points de fixation.

En outre, pour placer la baguette en position écartée de prémontage, puis pour la mettre en position plaquée de verrouillage, l'opérateur doit effectuer dans les deux cas un mouvement de même nature : une poussée « en Y » perpendiculaire au support.

L'opérateur doit donc, lors du prémontage, doser son effort de poussée pour que les parties cylindriques des organes de prémontage ne coulissent pas trop loin dans les pièces d'emboîtement et que les ergots des parties cylindriques ne dépassent pas leur position de réception dans les creux des pièces d'emboîtement.

Cette opération étant relativement délicate et menée à une cadence très rapide, il arrive que certaines baguettes se retrouvent trop près de la carrosserie. La présence de la baguette gêne alors les opérations ultérieures de traitement de la zone de carrosserie située derrière et empêche une pulvérisation correcte des différentes couches de peinture.

Le but de l'invention est de fournir une autre solution, plus avantageuse, pour résoudre ce problème technique.

Pour résoudre ce problème technique, l'invention propose un clip de fixation selon la revendication 1, dont le préambule est connu du document FR 2 887 598.

L'élément basculant d'accrochage est une pièce séparée venant se monter à pivotement sur la pièce de base. Elle présente une tête creuse et une partie arrière formée de trois branches flexibles dont deux branches de pivotement terminées chacune par un bout d'axe coopérant avec les moyens de palier de la pièce de base et une branche médiane surélevée présentant une extrémité d'immobilisation. La tête creuse se dresse au-dessus d'une base par un corps de section sensiblement rectangulaire et se termine par une bordure supérieure.

Les bords latéraux de la base et la sous-face de la bordure supérieure présentent de chaque côté une succession de rampes opposées inférieures et supérieures délimitant un passage pour les bords longitudinaux de la partie étroite de l'ouverture de montage. La face latérale du volume intérieur de la tête creuse comporte des structures complémentaires d'encliquetage et la tête présente en partie inférieure frontale une saillie de butée pour un appui de contact contre le bord transversal terminal de la partie étroite de l'ouverture de montage.

L'élément d'accrochage peut ainsi basculer par rapport à la pièce de base entre une position haute et une position basse, correspondant à deux positions de montage de l'élément linéaire sur son support, à savoir respectivement une position écartée de prémontage à distance du support et une position verrouillée et plaquée contre le support, correspondant à sa position finale d'utilisation.

Comme indiqué, le clip de fixation comporte une platine d'étanchéité destinée à obturer l'ouverture de montage lorsque l'élément linéaire est en position finale d'utilisation. Cette platine d'étanchéité permet ainsi par exemple de limiter l'entrée d'eau et de saletés à l'intérieur de la carrosserie et d'atténuer la transmission des bruits.

Avantageusement, la platine d'étanchéité est portée par la pièce de base du clip de fixation et se trouve ainsi à distance du support dans la position écartée de prémontage et en contact avec celui-ci dans la position de verrouillage.

L'invention fournit également un élément linéaire décoratif ou fonctionnel, par exemple du type baguette, bande, moulure, enjoliveur de ceinture de caisse ou de bas de caisse, destiné à être rapporté contre et monté sur un support et plus particulièrement la carrosserie d'un véhicule routier notamment du type automobile, qui comporte sur sa face intérieure au moins un clip de fixation à deux positions de maintien selon l'invention.

Grâce à leurs deux positions de maintien, les clips de fixation selon l'invention, répartis sur toute la baguette, assurent à la fois le prémontage de la baguette en position écartée et le verrouillage final de celle-ci en position plaquée contre son support. Quelle que soit sa position de montage, la baguette selon l'invention est donc supportée par l'ensemble des clips de fixation, sur toute sa longueur.

Avantageusement, le prémontage de la baguette s'effectue au moyen d'un mouvement de coulissement longitudinal, c'est-à-dire au moyen d'un mouvement de translation dit « en X », alors que le montage final en position plaquée de verrouillage requiert une poussée transversale en « Y » perpendiculaire au support. Ces deux mouvements bien distincts évitent tout risque d'erreur de la part de l'opérateur.

En outre, grâce à la conception particulièrement inventive du clip selon l'invention, les surfaces de contact entre l'élément d'accrochage du clip et la tôle de carrosserie sont réduites en nombre et en surface par des contacts souvent ponctuels.

Les produits de traitement et/ou de peinture arrivent sur toutes les zones et peuvent ainsi être appliqués sur sensiblement toute la superficie du support. Comme indiqué, la surface de contact entre le support et le clip de fixation selon l'invention est extrêmement réduite en position écartée de prémontage.

La pièce de base du clip de fixation selon l'invention est une pièce moulée indépendamment et rapportée ensuite sur la face intérieure de la baguette et plus généralement de l'élément linéaire.

Elle peut avantageusement être montée par coulissement sur deux nervures longitudinales s'étendant sur la face arrière de l'élément linéaire, ce qui autorise une translation du clip en cas de dilatation de l'élément linéaire différente de celle du support.

Par ailleurs, une structure élastique de butée apporte un auto-ajustement du clip en position sur la baguette permettant au prémontage de se centrer automatiquement par rapport à l'ouverture de montage malgré des variations de position de celle-ci dues à la tolérance mécanique autorisée pour la carrosserie.

D'autres caractéristiques et avantages de l'invention apparaîtront à la lecture de la description détaillée qui va suivre, description faite en référence aux dessins annexés, dans lesquels :
- la figure 1 est une vue générale en perspective de la face intérieure d'un tronçon de baguette équipé de trois clips de fixation à deux positions de maintien selon l'invention,
- la figure 2 est une vue en perspective de l'avant d'un clip de fixation selon l'invention monté sur les deux rails d'une zone de coulissement,
- la figure 3 est une vue en perspective de l'arrière d'un clip de fixation selon l'invention monté sur les deux rails d'une zone de coulissement,
- la figure 4 est une vue en perspective de la pièce de base d'un clip de fixation selon l'invention,
- la figure 5 est une vue de face de la pièce de base,
- la figure 6 est une vue en perspective de dessous de la pièce de base d'un clip de fixation selon l'invention,
- la figure 7 est une vue en perspective de l'élément d'accrochage avec son élément d'accrochage,
- la figure 8 est une vue en perspective de l'arrière du clip de fixation complet en position relevée selon l'invention,
- la figure 9 est une vue de profil du clip de fixation complet selon l'invention correspondant à la figure 8,
- les figures 10 et 11 sont des vues schématiques en coupe transversale à travers le clip de fixation en position haute respectivement au niveau de chacun des doigts d'encliquetage,
- la figure 12 est une vue en perspective de l'arrière du clip de fixation complet avec son élément d'accrochage en position basse,
- la figure 13 est une vue de profil du clip de fixation complet correspondant à la figure 12,
- les figures 14 et 15 sont des vues schématiques en coupe transversale à travers le clip de fixation en position basse respectivement au niveau de chacun des doigts d'encliquetage,
- les figures 16 à 25 forment une succession de vues schématiques illustrant la pose d'une baguette et les deux positions caractéristiques, l'une écartée de la carrosserie qui est la position de traitement par cataphorèse et l'autre la position définitive dans laquelle la baguette est plaquée contre la carrosserie,

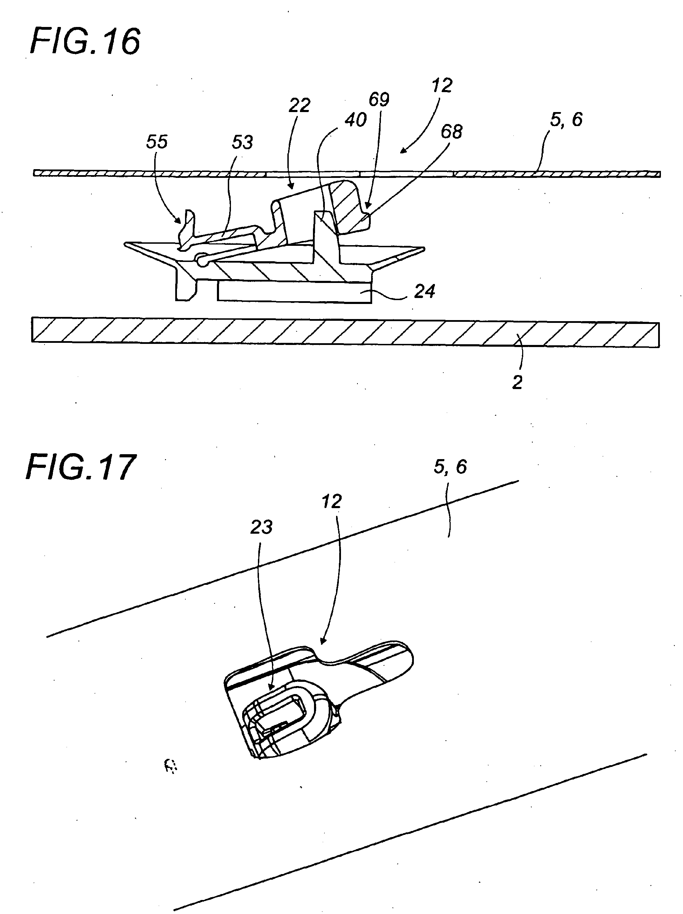

- les figures 16 et 17 sont des vues schématiques simplifiées, en coupe puis en perspective, illustrant l'approche du clip en face d'une ouverture de montage,

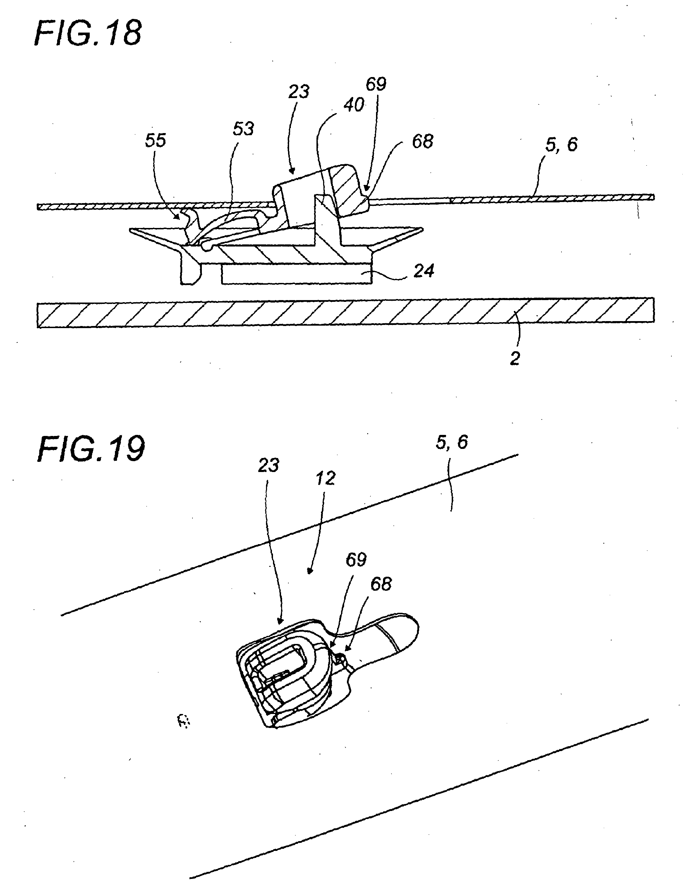

- les figures 18 et 19 sont des vues schématiques simplifiées, en coupe puis en perspective, illustrant l'engagement de la tête de clip dans l'ouverture de montage,

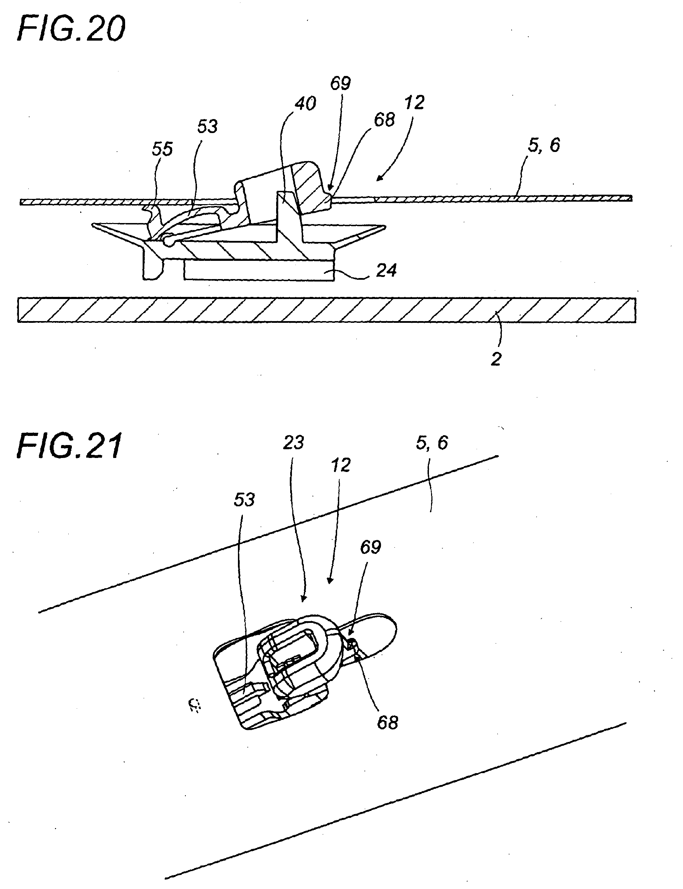

- les figures 20 et 21 sont des vues schématiques simplifiées, en coupe puis en perspective, illustrant l'engagement de la tête de clip dans la partie étroite de l'ouverture de montage après translation,

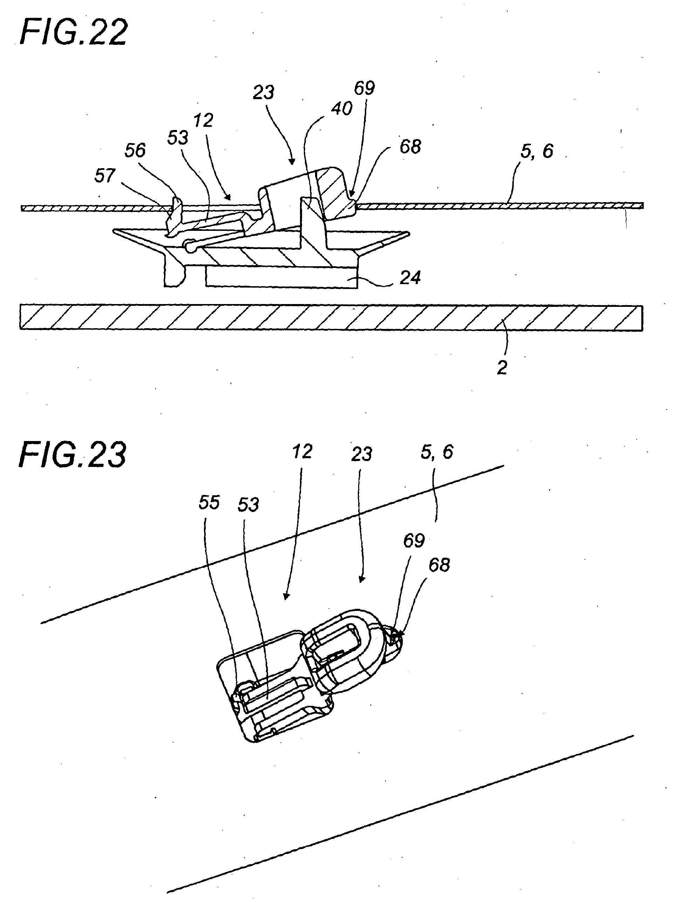

- les figures 22 et 23 sont des vues schématiques simplifiées, en coupe puis en perspective, illustrant la position écartée de traitement dans laquelle l'élément d'accrochage est calé en présentation inclinée contre chaque bord transversal de l'ouverture de montage,

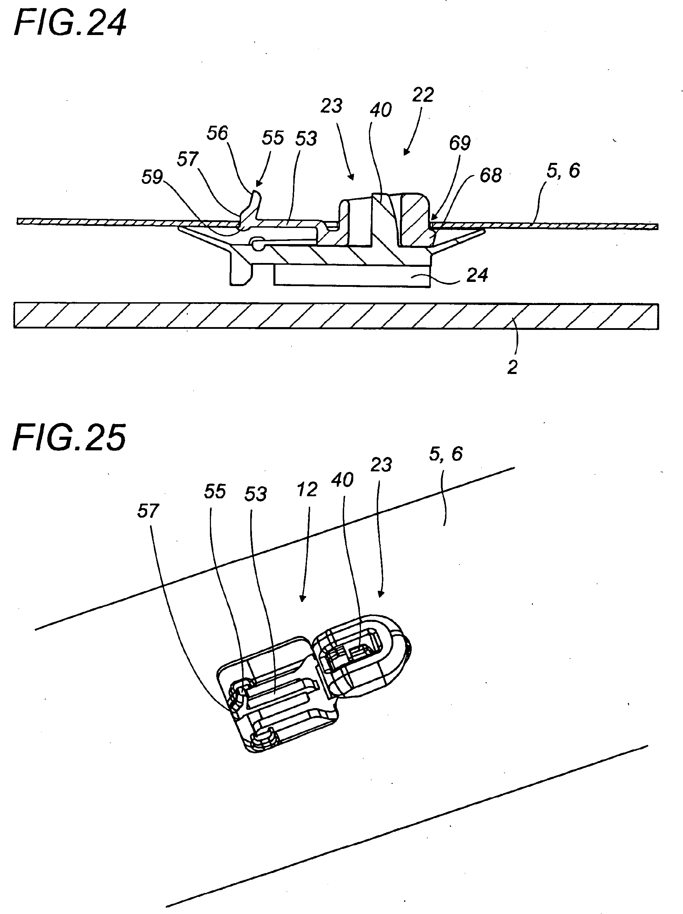

- les figures 24 et 25 sont des vues schématiques simplifiées, en coupe puis en perspective, illustrant la position plaquée d'utilisation dans laquelle l'élément d'accrochage est enfoncé et calé dans l'ouverture de montage.

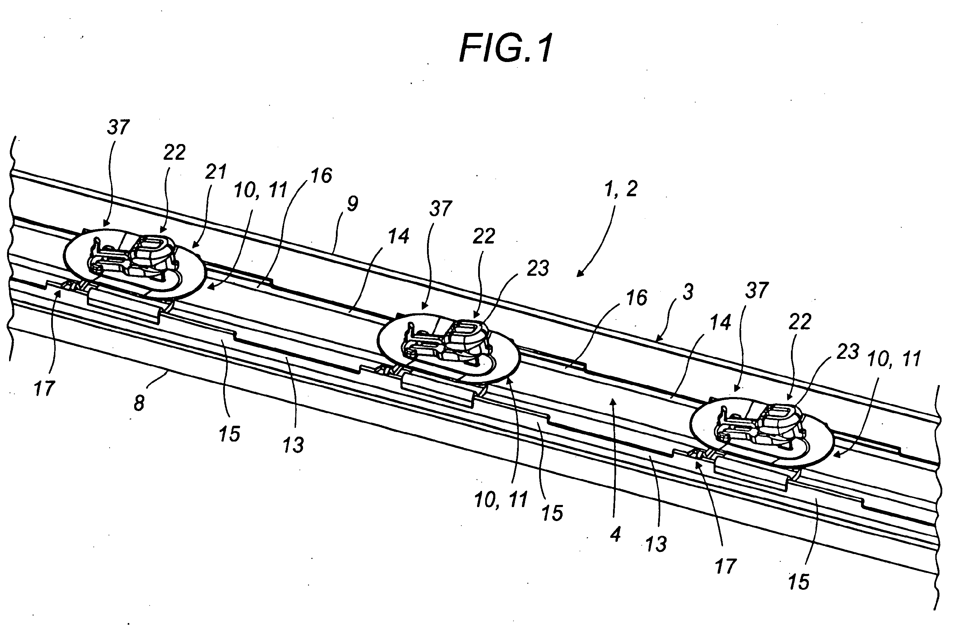

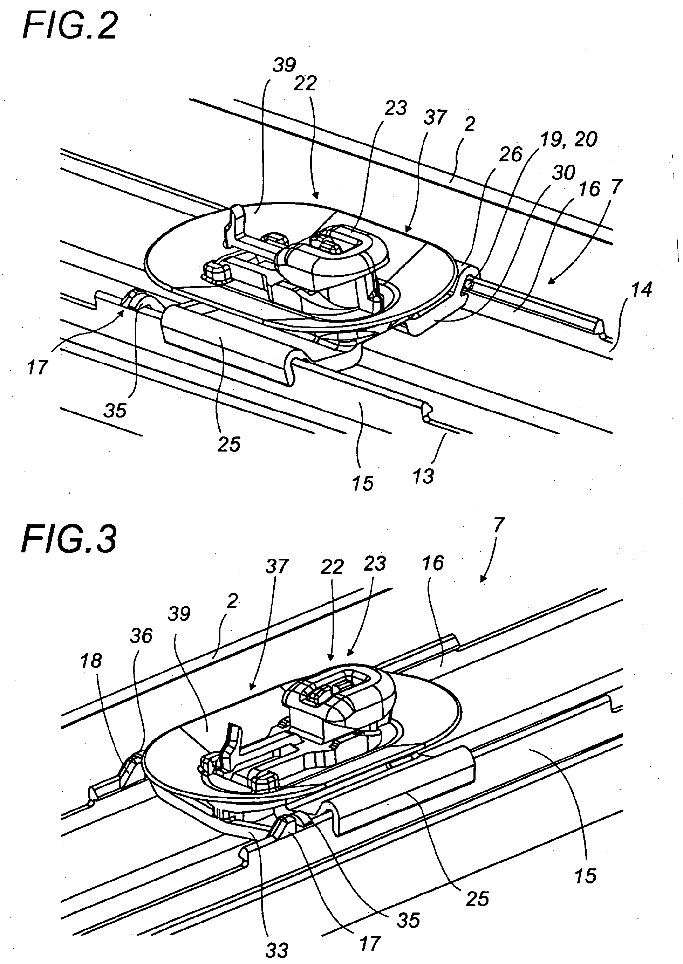

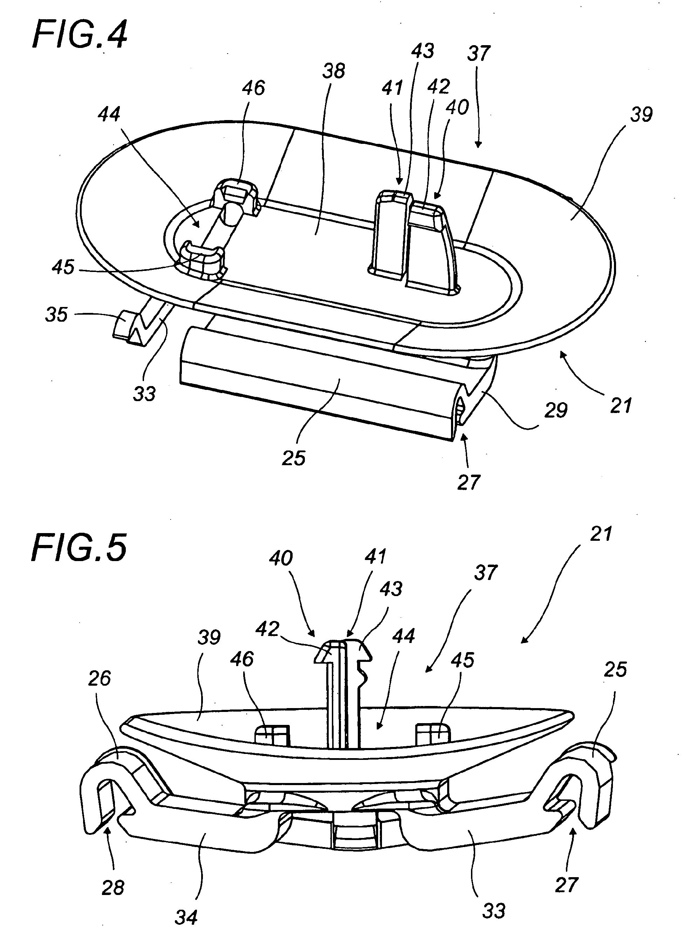

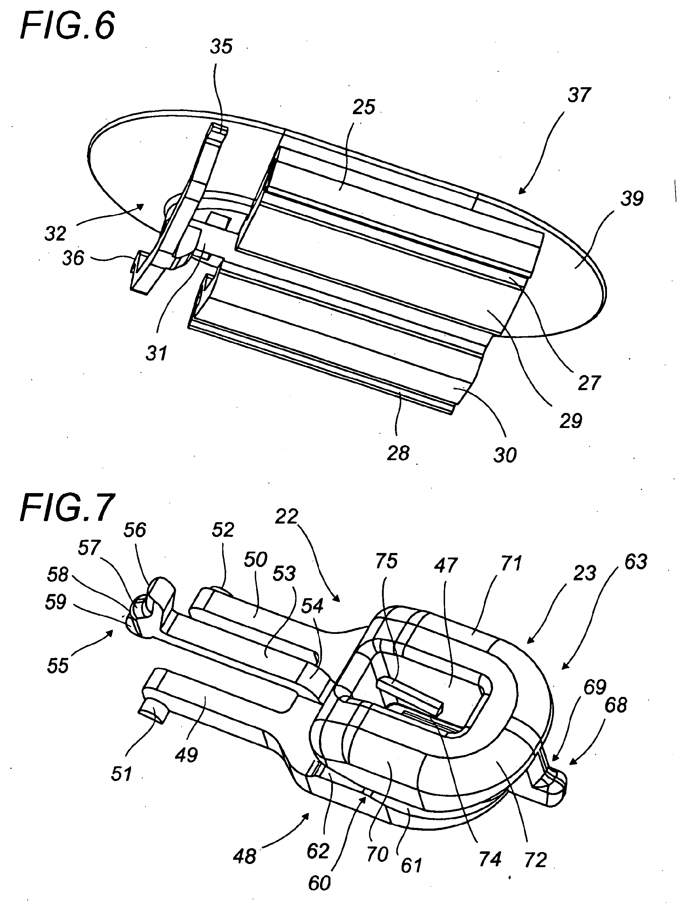

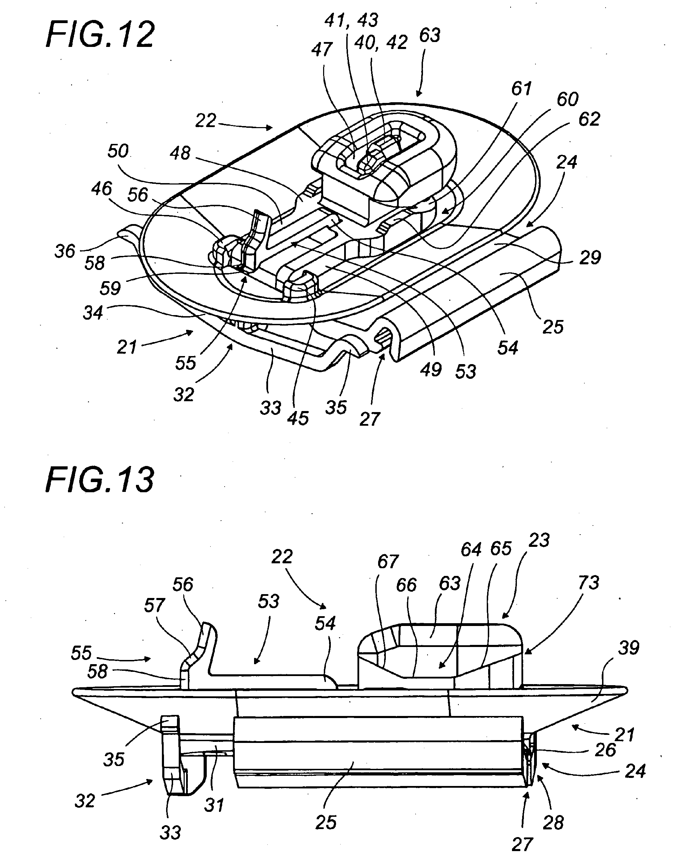

La baguette et le clip de fixation selon la présente invention vont maintenant être décrits de façon détaillée en référence aux figures 1 à 25. Les éléments équivalents représentés sur les différentes figures porteront les mêmes références numériques.

La présente invention se rapporte de façon générale à un élément linéaire à fixer sur un support et plus particulièrement sur la carrosserie d'un véhicule routier.

Par élément linéaire on entend plus particulièrement tout élément décoratif et/ou fonctionnel par exemple du type baguette, bande, moulure et autre que l'on fixe sur les portes, les ceintures de caisse, les bas de caisse ou autres parties de la carrosserie d'un véhicule routier. Pour des raisons de commodité on regroupera tous ces objets par le seul terme de baguette.

De la même façon, cet élément linéaire peut être rapporté et fixé sur tout support présentant les orifices appropriés. Cependant, l'application préférentielle visée concernant la carrosserie d'un véhicule, ce support sera désigné par la suite par le terme de carrosserie.

Sur les différentes figures, on a représenté des clips de fixation et une baguette constituant des modes de réalisation préférentiels de l'invention. En effet, les clips de fixation représentés sur les figures et décrits dans la suite de la demande sont des clips rapportés sur la baguette et qui présentent une tête de clip de forme générale en « U couché ». Il doit cependant être bien compris que ces figures ainsi que la description détaillée de celles-ci ne sont données qu'à titre d'exemple et ne sont en rien limitatives de la portée de l'invention définie par les revendications. Ainsi, par exemple, la tête de clip pourrait présenter toute autre forme appropriée pour coopérer avec l'ouverture correspondante de la carrosserie.

Par convention dans cette description, on désignera par faces avant et arrière du clip les faces de celui-ci dirigées respectivement vers la partie étroite et vers la partie large de l'ouverture de montage en forme de trou de serrure, lorsque le clip est monté sur la carrosserie. Les notions de haut et de bas seront définies en fonction de l'orientation du clip tel que représenté sur les figures.

Le clip selon l'invention se monte en un ou plusieurs endroits sur un élément rapporté par exemple une baguette décorative et/ou antichoc rapportée et fixée sur la carrosserie d'un véhicule routier.

Cette baguette de carrosserie est de préférence du type à traitement en ligne par cataphorèse avec la carrosserie lors de la fabrication d'un véhicule routier.

Un tronçon 1 d'une telle baguette 2 a été représenté sur la figure 1.

Ce tronçon 1 de baguette 2 se présente sous la forme d'une pièce allongée qui comporte deux faces, une face extérieure 3 visible lorsque la baguette est montée, par exemple bombée convexe, et une face intérieure 4, par exemple concave, appliquée contre un support récepteur 5 par exemple la tôle d'une carrosserie 6.

Le corps de la baguette 2 définit ainsi du côté de sa face intérieure 4 un espace intérieur creux 7 longitudinal, continu et ouvert, destiné à être placé en direction du support 5, préférentiellement la carrosserie 6 d'un véhicule.

De manière classique, l'espace creux 7 est limité sur les côtés par deux rebords 8 et 9 longitudinaux, sensiblement verticaux ou obliques selon les exigences de style.

La baguette 2 comporte sur sa face intérieure 4 des moyens de fixation 10 de la baguette 2 sur le support 5. Selon l'invention, ces moyens de fixation 10 sont des clips de fixation 11 à deux positions de maintien.

Pour assurer le montage et la fixation de la baguette 2 sur le support 5, ces clips de fixation 11 sont conçus pour coopérer avec une série d'ouvertures de montage 12 prévues en regard dans le support 5, préférentiellement la tôle de la carrosserie 6, notamment au niveau des portes ou des bas de caisse.

De façon connue, la forme de ces ouvertures de montage 12 est du type en « trou de serrure ». Elles présentent ainsi une zone large sensiblement rectangulaire, prolongée en partie médiane par une zone étroite.

Les clips de fixation 11 existent en plusieurs endroits, de préférence sur sensiblement toute la longueur du corps de la baguette 2, de manière à garantir un maintien uniforme et solide de la pièce moulée contre le support 5. Ils sont disposés selon un espacement prédéterminé correspondant à celui des ouvertures de montage 12 avec lesquelles ils se retrouvent en vis-à-vis lorsque la baguette est positionnée contre son support 5.

Sur la figure 1, on a représenté plusieurs clips de fixation 11 positionnés de manière équidistante le long de la baguette. Néanmoins, suivant les modèles de baguette 2 et les possibilités d'ouverture de montage 12 dans le support 5, ces clips 11 peuvent être disposés différemment.

Pour satisfaire aux besoins du traitement par cataphorèse, et de peinture ultérieure, ces clips de fixation comportent deux positions d'immobilisation : la première correspondant à une position de prémontage dans laquelle le corps de la baguette se trouve maintenu à une certaine distance de la carrosserie compatible avec le passage du liquide du bain de cataphorèse et la projection de peinture et la deuxième correspondant à sa position finale dans laquelle la baguette de carrosserie est plaquée contre la carrosserie. Cette dernière constitue la position définitive.

La baguette 2 ou autre élément rapporté sur la carrosserie au moyen de ces clips 11 est un corps par exemple rectiligne présentant en outre à l'une de ses extrémités un moyen d'indexation longitudinale (non représenté), également appelé dispositif de fixation positive.

Il peut s'agir d'un autre clip, par exemple à quart de tour, d'un dispositif d'encliquetage du type marteau, fût, croix, d'un élément vissé ou tout autre dispositif. Seule sa fonction importe et non sa nature, car la baguette doit être fixée et immobilisée à l'une de ses extrémités.

De façon optionnelle, ce dispositif de fixation positive peut être suffisamment long pour également immobiliser longitudinalement la baguette lorsqu'elle se trouve en position écartée. Dans ce cas, il participe aussi à la fixation de la baguette sur la carrosserie durant les opérations de mise en peinture.

Le corps de la baguette présente sur sa face intérieure 4, des structures parallèles, par exemple des nervures ou analogues, sur une partie desquelles est monté déplaçable à chaque fois un clip de fixation 11 selon l'invention.

La fonction générale est celle du maintien latéral du clip par sa pièce de base tout en permettant un déplacement longitudinal destiné à absorber l'allongement dû à la dilatation thermique.

Les moyens particuliers tels que représentés sur les figures sont deux nervures longitudinales 13 et 14, formant localement des tronçons de rails de coulissement 15 et 16, qui se prolongent de préférence sensiblement sur toute la longueur de la baguette 2. Ces nervures longitudinales 13 et 14 sont préférentiellement minces afin d'éviter de provoquer des retassures sur l'autre face. Ces nervures présentent une épaisseur et une hauteur agrandies sur des zones délimitées aux endroits correspondant à chaque position des clips et formant les tronçons de rails 15 et 16. Leur nombre est fonction de la longueur de la baguette.

Chaque tronçon de rail 15 ou 16 présente à la même extrémité, conformé dans sa structure, un butoir arrière 17 ou 18 sous la forme d'une saillie à front plan d'arrêt pour la base du clip de fixation ou un élément élastique faisant partie de cette base.

De manière optionnelle, l'autre extrémité des tronçons de rail 15 ou 16 peut également présenter au moins une surépaisseur locale 19 également conformée dans la matière du rail, servant de butée d'immobilisation du clip de fixation 11. Ces au moins deux surépaisseurs locales 19 sont peu importantes de manière à pouvoir être franchissables par la pièce de base du clip de fixation 11 lors de son coulissement sur la baguette 2. Elles ne constituent chacune qu'une butée provisoire 20 permettant avec le butoir l'immobilisation du clip de fixation par exemple lors du transport, du stockage et de la manipulation de la baguette avant sa pose.

Selon l'invention, chaque clip de fixation 11 est constitué de deux pièces indépendantes, articulées entre elles à pivotement.

Chaque clip 11 se compose d'une pièce de base 21 montée déplaçable longitudinalement sur les tronçons de rails 15 et 16 de la face intérieure 4 de la baguette 2 et d'un élément d'accrochage 22 monté pivotant ou basculant sur la pièce de base et présentant une tête de clip 23 conçue pour s'engager dans l'ouverture de montage 12 correspondante du support afin d'assurer le maintien de la baguette 2 sur la carrosserie 6.

On découvrira ci-après à l'aide des dessins la structure particulière du clip basculant à deux positions.

La pièce de base 21 se compose d'une partie basse par laquelle le clip se trouve monté coulissant sur les structures de rails 15 et 16 de la baguette 2.

Cette partie basse du corps du clip se compose d'un coulisseau 24 monté à coulissement sur les deux rails des tronçons de rails 15 et 16.

A cet effet, le corps du coulisseau 24 comporte le long de ses côtés longitudinaux deux conformations en tubes de coulissement 25 et 26, ouverts chacun en partie inférieure selon une fente 27 et 28 dont l'ouverture présente des structures longitudinales permettant de venir s'enclipser sur la tête d'un tronçon de rail 15 ou 16.

La tête de ce tronçon de rail peut présenter un retrait de section à sous-face plane coopérant avec un retour de la paroi côté intérieur de chaque tube de coulissement pour assurer une immobilisation de la pièce de base 21 par rapport au corps de la baguette en rapprochement ou en éloignement de celui-ci.

Les deux tubes de coulissement 25 et 26 sont reliés chacun à la partie supérieure de la pièce de base par un pont de matière respectivement 29 et 30. A l'arrière, la pièce de base 21 comporte en sous-face une arête médiane 31 terminée vers le bas par une structure flexible de butée 32 à deux branches transversales flexibles 33 et 34 venant porter chacune, par son extrémité libre conformée en crochet 35 ou 36, à libre coulissement sur le tronçon de rail correspondant 15 ou 16 et entrant en contact de butée avec le front plan du butoir 17 ou 18 conformé dans chaque tronçon de rail. Chaque branche 33 et 34 est flexible, ce qui apporte, comme on le verra ci-après, une liberté de déplacement longitudinal sur les tronçons de rails au delà du butoir 17 ou 18 permettant à la pièce de base 21 et donc au clip de fixation 11 d'ajuster sa position par rapport à l'ouverture de montage 12 et d'absorber ainsi les variations en position des bords de l'ouverture de montage dues aux écarts liés à la tolérance mécanique définie par le constructeur.

La pièce de base 21 se poursuit vers le haut par une platine d'étanchéité 37 à fond 38 et à bordure périphérique 39.

La platine d'étanchéité 37 est destinée à recouvrir à obturation l'ouverture de montage 12 dans la carrosserie lorsque la baguette 2 est en place définitive, afin de limiter l'entrée d'eau et de saletés à l'intérieur de la carrosserie et d'atténuer la transmission des bruits.

Cette platine d'étanchéité 37, de préférence à fond sensiblement parallèle à la baguette 2, est préférentiellement de forme générale ovale ou rectangulaire. Elle comporte, comme représenté, un fond 38 sensiblement plat et une bordure périphérique flexible 39 remontante dirigée vers l'ouverture de montage.

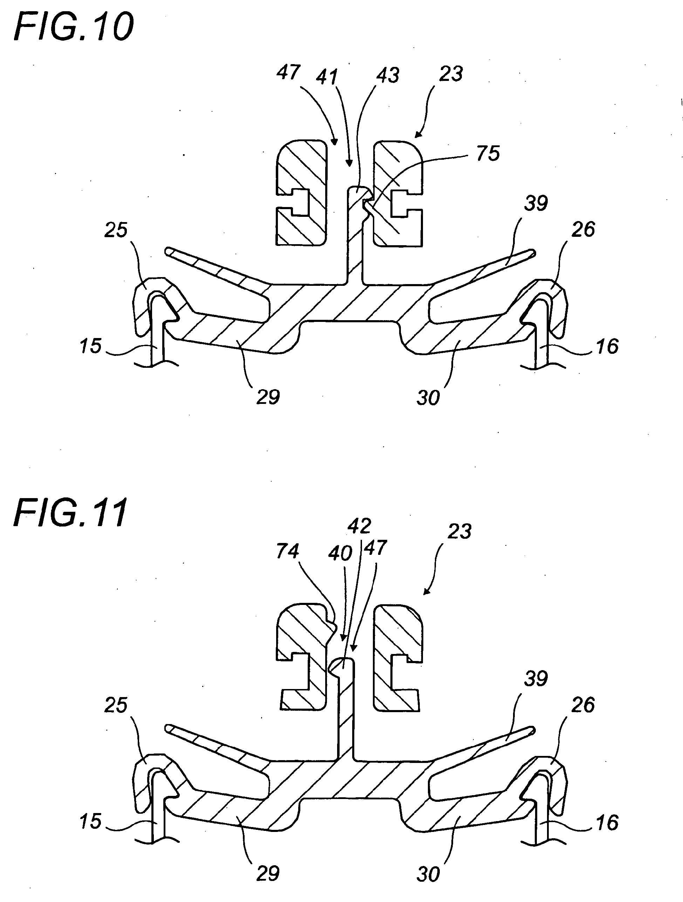

Du fond 38 de cette platine d'étanchéité se dressent deux doigts d'encliquetage flexibles avant 40 et arrière 41 en rappel élastique contraire en écartement transversal par rapport à la platine d'étanchéité 37. Ces doigts sont terminés chacun par une extrémité en crochet simple 42 ou double 43 pour le verrouillage par encliquetage, chaque doigt d'encliquetage 40, 41 correspondant à une position caractéristique de l'élément d'accrochage 22 basculant du clip comme représenté sur les figures 10, 11 et 14, 15.

Le chant avant du doigt flexible avant 40 est légèrement incurvé vers l'arrière selon une forme dégageante pour coopérer avec la surface interne en regard de la tête creuse 23 du clip lui servant d'appui glissant lors du mouvement de basculement.

A l'autre extrémité, la platine d'étanchéité 37 comporte une structure de palier 44 recevant l'axe de pivotement de l'élément d'accrochage 22 basculant. Il peut s'agir, comme représenté, d'une structure double de palier recevant les bouts d'axes de l'élément d'accrochage basculant.

Plus particulièrement, la réalisation représentée se compose de deux conformations palières en regard, conformées chacune selon un plot 45 et 46 à évidement récepteur transversal cylindrique pour la réception d'un bout d'axe constituant les extrémités de l'axe géométrique de basculement.

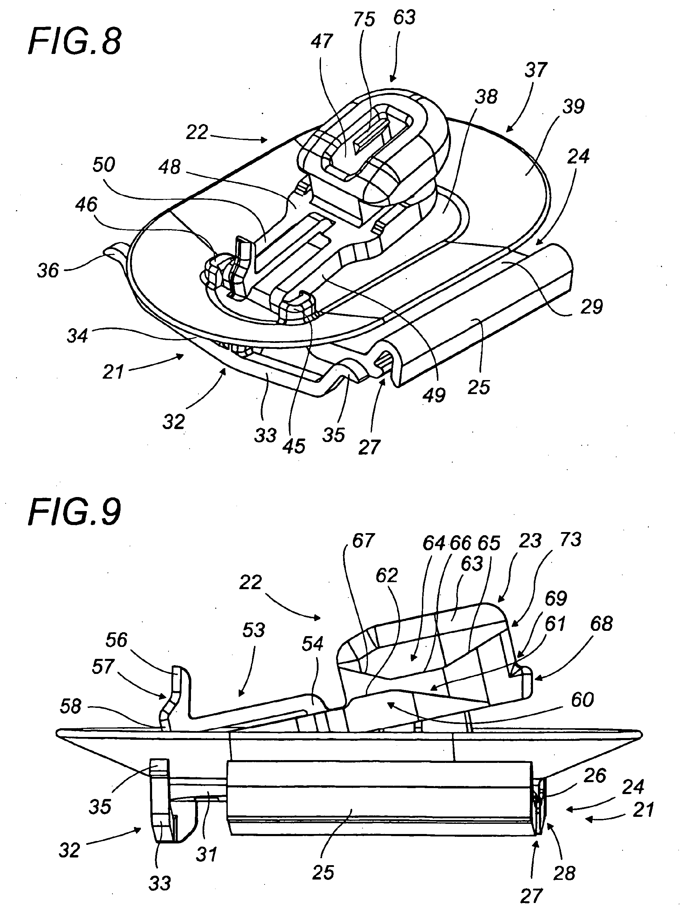

L'élément d'accrochage 22 basculant vient se monter sur la pièce de base 21 en position inclinée comme représenté sur les figures 8 et 9.

Cet élément d'accrochage 22 basculant se compose de la tête de clip 23 qui présente un évidemment central 47 traversant, et d'une base 48 en forme de platine se poursuivant selon trois branches.

La partie avant de la base 48 constitue la naissance de l'élément d'accrochage 22 qui se poursuit de façon monobloc vers le haut pour constituer la tête de clip 23 et vers l'arrière par trois branches.

Parmi les trois branches, il existe deux branches flexibles de basculement 49 et 50 présentant chacune une extrémité conformée latéralement en bout d'axe cylindrique 51 et 52 venant s'engager à pivotement dans l'évidement du plot correspondant 45 ou 46 servant de palier.

Il existe entre les branches de basculement 49 et 50 une branche médiane anti-recul 53 qui est une branche flexible de positionnement et de maintien coopérant avec le bord transversal arrière de l'ouverture. Cette branche anti-recul 53 est surélevée par rapport aux autres par un coude 54 à l'une de ses extrémités alors que son autre extrémité 55 est conformée en tête de chien à chant avant arrondi présentant vers le haut une pointe 56 à chant extérieur plat suivie vers le bas par une rampe montante d'engagement 57 et un méplat 58 terminé par un ergot de blocage 59 formant ensemble un coin de calage.

Les bords latéraux supérieurs de la base 48 sont conformés de chaque côté en une succession inférieure telle que 60 de rampes se décomposant préférentiellement en une rampe inclinée montante 61 suivie d'un méplat d'appui 62 dans le sens de l'avant vers l'arrière.

La naissance de la tête 23 de clip est un corps rectangulaire creux. Celui-ci se renforce en partie supérieure par une bordure supérieure épaisse 63 absente sur la partie arrière.

Cette bordure 63 présente de chaque côté conformées dans sa sous-face une succession supérieure telle que 64 de rampes en pans coupés, préférentiellement sous la forme d'une rampe descendante 65, d'un plat 66 et d'une rampe montante 67 dans le sens de l'avant vers l'arrière.

Le front avant de l'élément d'accrochage 22 présente en partie inférieure une saillie avant de butée 68 de faible largeur à partie supérieure faiblement inclinée descendante et à front avant bombé. La partie supérieure de cette saillie de butée 68 forme avec le front avant de l'élément d'accrochage 22 un coin de calage 69 sur le bord transversal avant de l'ouverture de montage 12 une fois le clip de fixation 11 basculé en position plaquée finale.

Selon une variante préférentielle de l'invention, la bordure supérieure de la tête de clip 23 présente un corps de forme générale dite en « U couché » comprenant deux branches latérales 70, 71 réunies à l'avant par une portion centrale incurvée 72. Cette conformation garantit un effet avantageux de centrage lors de l'introduction des différentes têtes de clip 23 de la baguette 2 dans chaque zone large des ouvertures de montage 12 correspondantes de la carrosserie 6.

Pour faciliter le passage de la tête de clip 23 vers la zone étroite de l'ouverture de montage, la partie avant centrale incurvée 72 de la bordure supérieure peut présenter en sous-face un chanfrein d'entrée 73.

Les parois latérales de l'évidement central 47 de la tête de clip se trouvant en regard des doigts d'encliquetage 40 et 41 présentent des conformations, par exemple en saillies ou en creux, adaptées pour coopérer avec les extrémités en crochet 42 et 43 des doigts d'encliquetage 40 et 41 et assurer ainsi l'immobilisation de l'élément basculant d'accrochage 22 dans l'une et l'autre de ses deux positions caractéristiques correspondant à la position décalée et à la position plaquée de la baguette 2 respectivement avant et après le traitement par cataphorèse.

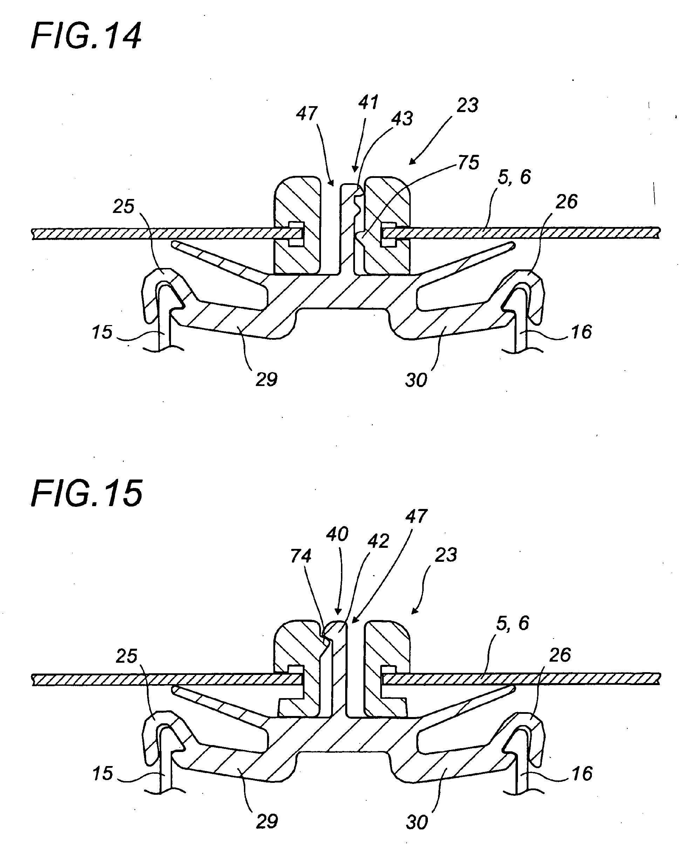

Sur le mode de réalisation préférentiel représenté, ces conformations sont des rebords 74 et 75 plats perpendiculaires à la paroi adjacente ou légèrement inclinés descendant vers la partie centrale de l'évidement placés, en position haute pour celui 74 destiné à coopérer avec le doigt d'encliquetage 40 à extrémité en crochet simple 42 et en position basse pour celui 75 destiné à coopérer avec le doigt d'encliquetage 41 à extrémité en crochet double 43. Les positions de ces doigts sont visibles sur les figures 10 et 11 pour la position de prémontage de la baguette et sur les figures 14 et 15 pour la position définitive de la baguette.

L'inclinaison du ou des rebords 74 et/ou 75 permet un rattrapage de jeu et une certaine facilité d'encliquetage.

On expliquera le montage de la baguette qui est illustré par les schémas des figures 16 à 25.

Lors de l'utilisation, on présente les clips 11 par leur tête de clip 23 en face des ouvertures de montage 12 en trou de serrure présentant une partie large et une partie étroite comme représenté sur les figures.

Les têtes 23 entrent dans la partie large des ouvertures de montage. Un ajustement en position du corps du clip par rapport à l'ouverture s'effectue automatiquement par l'effet de la flexibilité des branches 33, 34 de la structure élastique de butée 32 par rapport aux butoirs 17 et 18 conformés dans les tronçons de rails 15 et 16.

Comme déjà indiqué, la structure 32 de butée élastique sert à compenser les écarts de poinçonnage des ouvertures de carrosserie et permet de garantir par déformation que la totalité des clips de la baguette sont en butée.

Par un mouvement de translation de la baguette 2 vers l'avant, on déplace les têtes de clip 23 vers la partie étroite de chaque ouverture de montage 12 en trou de serrure. Les bords longitudinaux de cette ouverture viennent en contact de déplacement entre les rampes inférieures 60 et supérieures 64 le long de la naissance de la tête 23 de chaque clip 11. En raison de la forme de ces rampes, chaque tête de clip 23 garde sa présentation inclinée par rapport à la pièce de base 21 en passant le long des bords de l'ouverture de montage 12 dans l'espace existant entre les deux séries de rampes inférieures 60 et supérieures 64.

Le mouvement s'arrête lorsque la saillie avant de butée 68 du front avant de la tête de clip 23 bute contre le bord transversal avant par exemple incurvé de la partie étroite de l'ouverture de montage. La saillie avant de butée 68 de ce front avant se trouve alors en appui contre ce bord transversal. Dans cette position, l'extrémité 55 de la branche flexible anti-recul 53 assure un contact avec le bord transversal arrière de la partie large de l'ouverture de montage 12 par le début de sa rampe d'engagement 57 comme visible sur les figures 22 et 23.

Cette position inclinée est fixe et stable en raison de deux appuis d' extrémité sur chacun des bords transversaux avant et arrière de deux parties de l'ouverture de montage 12 et des deux appuis quasi-ponctuels de la sous-face de la bordure 63 de la tête de clip 23 sur la portion de carrosserie bordant latéralement l'ouverture de montage 12. La baguette 2 se trouve alors dans sa première position de montage correspondant à la position écartée de prémontage pour le traitement par cataphorèse.

On peut éventuellement engager également le moyen d'indexation dans l'ouverture correspondante équipée ou non d'un élément récepteur en s'assurant que l'intervalle minimal nécessaire au traitement de cataphorèse est maintenu.

Le liquide du bain de cataphorèse arrive pratiquement partout car on a limité le plus possible le nombre et l'étendue des surfaces en contact par des saillies de contact de dimensions minimales et se rétrécissant.

Lors de la cuisson pendant laquelle la température s'élève à plus de 200°C, l'allongement dû à la dilatation maximale de la baguette 2 s'effectue sans difficulté par mouvement de coulissement des pièces de bases 21 de chaque clip de fixation 11 sur les parties des nervures servant de tronçons de rails 15, 16 pour revenir ensuite après abaissement de sa température à sa longueur initiale de température ambiante.

Grâce aux différents contacts prévus entre le clip et la carrosserie, le clip est totalement immobilisé et se trouve en présentation finale devant l'ouverture car le mouvement de translation est terminé dès la mise en position de prémontage. On évite ainsi que la couche de cataphorèse soit raclée lors du mouvement de mise en position finale.

On projette ou on dépose ensuite les différentes couches par un procédé électrostatique. Grâce au décalage entre la baguette et la carrosserie en position écartée, la peinture recouvre la totalité de la surface visible de la carrosserie après la fixation de la baguette.

La mise en position définitive de la baguette 2 s'effectue par simple poussée d'enfoncement sur celle-ci globalement sur toute sa longueur ou successivement au niveau de chaque clip de fixation 11.

Lors de cet enfoncement, l'élément basculant d'accrochage 22 pivote vers le bas par réaction de l'appui de l'extrémité 55 de la branche flexible anti-recul 53 qui porte sur le bord transversal arrière de la partie large de l'ouverture de montage 12.

La saillie avant de butée 68 descend de l'autre côté de la tôle par échappement du bord transversal avant de la partie étroite de l'ouverture de montage sur lequel elle était en appui de butée et pour s'y caler par le coin de calage 69.

L'extrémité 55 de la branche flexible anti-recul 53 est comprimée par le franchissement du bord transversal arrière de la partie large de l'ouverture de montage pour venir s'immobiliser en butée contre ce bord par son ergot de blocage 59 et s'y caler. Cette butée, par la flexibilité de la branche anti-recul 53, permet de garder une certaine souplesse dans la fixation qui est, par ailleurs, garantie par le verrouillage apporté par l'encliquetage du doigt d'encliquetage 40 sur le rebord haut 74 correspondant.

Cette deuxième position plaquée contre la carrosserie 6 correspond à celle de la fixation définitive de la baguette 2.

Il y a lieu de remarquer que les deux principales phases du montage s'effectuent pour la première par un coulissement selon la direction X et pour la deuxième par une poussée selon la direction Y.

La baguette 2 ainsi que les deux parties 21 et 22 de ses clips de fixation 11 doivent être réalisées dans une matière plastique résistant aux températures importantes rencontrées lors de la cataphorèse.

L'élément d'accrochage 22 et la pièce de base 21 du clip de fixation 11 sont des pièces moulées par injection indépendamment de la baguette, qui, une fois la baguette montée sur la carrosserie, ne sont pas visibles par l'utilisateur car situées à l'arrière de la baguette. Elles peuvent donc en outre être renforcées par des fibres de verre.

La matière plastique utilisée pour la réalisation de la baguette et de ses clips de fixation doit également contenir un additif, du noir de carbone par exemple, lui conférant la conductivité suffisante et nécessaire à la réalisation des étapes de peinture électrostatique.

L'homme du métier pourra sans difficulté imaginer d'autres variantes ou adaptations du clip de fixation à deux positions de maintien selon l'invention, en fonction de l'application souhaitée et des contraintes techniques auxquelles le clip et la baguette porteuse doivent répondre.

## Revendications

1. Clip de fixation destiné à assurer la fixation sur un support, et plus particulièrement sur la carrosserie (6) d'un véhicule routier notamment du type automobile à traiter par cataphorèse, d'un élément linéaire décoratif et/ou fonctionnel, par exemple du type baguette (2), bande, moulure, enjoliveur de ceinture de caisse ou de bas de caisse, clip de fixation (11) comprenant une pièce de base (21) et un élément d'accrochage (22) destiné à être monté sur la pièce de base (21), l'élément d'accrochage (22) comportant une structure saillante d'accrochage appelée tête de clip (23) conçue pour coopérer avec une ouverture de montage (12) du type en « trou de serrure » présentant une partie large et une partie étroite, ménagée en regard dans la carrosserie, et l'élément linéaire ou la baguette (2) étant mobile entre une position de prémontage écartée de la carrosserie pour son traitement par cataphorèse et une position plaquée contre la carrosserie correspondant à sa position finale d'utilisation, clip de fixation (11) comportant en outre une platine d'étanchéité (37) destinée à obturer l'ouverture de montage (12) lorsque l'élément linéaire ou baguette (2) est en position finale d'utilisation, le clip de fixation (12) étant
**caractérisé en ce que** :
- l'élément d'accrochage (22) est monté basculant par rapport à la pièce de base (21) entre deux positions stables déterminées par des moyens de verrouillage et présente des moyens de calage dans l'ouverture de montage (12),
- la pièce de base (21) susceptible d'être montée déplaçable longitudinalement sur une ou des structures de rail de la face intérieure de l'élément linéaire comporte :
. deux moyens de retenue chacun dans une des positions stables de l'élément linéaire,
. un moyen de palier recevant à pivotement l'axe ou les extrémités de l'axe de basculement de l'élément d'accrochage (22).

2. Clip de fixation selon la revendication 1 **caractérisé en ce que** la pièce de base (21) comporte une structure de butée élastique (32) susceptible d'être en appui sur le rail et contre un butoir (17) ou (18) de déplacement sur les rails de la baguette pour une liberté de déplacement sur ces rails en vue d'ajuster automatiquement la position du clip par rapport à la position des bords latéraux de chaque ouverture, position variable en fonction de la tolérance permise.

3. Clip de fixation selon la revendication précédente **caractérisé en ce que** la structure de butée élastique (32) comprend deux branches flexibles (33) et (34) d'une seule pièce avec une prolongation de la partie inférieure de la pièce de base (21), l'extrémité libre (35) et (36) de chaque branche flexible étant conformée en crochet susceptible de venir reposer et porter à coulissement sur le rail d'un côté jusqu'à arrêt par contact avec le butoir correspondant (17) ou (18) sur le rail et autorisant de l'autre côté une course de débattement d'ajustement automatique à la position exacte d'un des bords transversaux de l'ouverture de montage.

4. Clip de fixation selon la revendication 1 **caractérisé en ce que** l'élément d'accrochage (22) présente une tête creuse (23) à évidemment central (47).

5. Clip de fixation selon les revendications 1 et 4 **caractérisé en ce que** les moyens de verrouillage sont constitués par deux doigts flexibles d'encliquetage (40) et (41) situés sur la pièce de base (21) et dans la tête creuse (23) de l'élément d'accrochage (22), pourvus chacun d'une structure d'encliquetage coopérant avec une structure homologue d'encliquetage conformée dans la paroi de l'évidement, chacun des doigts flexibles d'encliquetage correspondant à une position stable de l'élément d'accrochage (22) et étant en rappel élastique vers la paroi de l'évidement (47).

6. Clip de fixation selon la revendication précédente **caractérisé en ce qu'**un des doigts d'encliquetage (40) ou (41) présente un chant incurvé en forme dégageante sur lequel porte la paroi en regard de l'évidement de la tête (23) lors du mouvement de basculement de l'élément d'accrochage entre les deux positions stables.

7. Clip de fixation selon l'une quelconque des revendications précédentes **caractérisé en ce que** la pièce de base (21) et l'élément basculant d'accrochage (22) sont deux pièces moulées séparément.

8. Clip de fixation selon l'une quelconque des revendications précédentes **caractérisé en ce que** la pièce de base (21) se compose :
- d'un coulisseau (24) formé de deux bords tubulaires engagés à coulissement sur le rail et reliés entre eux par un pont de matière :
- d'une platine d'étanchéité (37) dans laquelle est conformé le moyen de palier (44) recevant à pivotement l'axe de basculement de l'élément d'accrochage (22),
- des deux doigts d'encliquetage (40) et (41) qui se dressent du fond de la platine d'étanchéité (37),
- d'une arête médiane (31) reliant le coulisseau (24) à la structure (32) de butée élastique.

9. Clip de fixation selon la revendication 1 **caractérisé en ce que** l'élément d'accrochage (22) présente une base (48) qui se poursuit en trois branches dont deux branches externes de pivotement (49) et (50) se terminant par l'axe de pivotement et une branche médiane anti-recul (53).

10. Clip de fixation selon la revendication précédente **caractérisé en ce que** la branche flexible médiane (53) anti-recul est surélevée.

11. Clip de fixation selon la revendication 9 ou 10 **caractérisé en ce que** la branche médiane (53) présente une extrémité (55) conformée en crochet à surface frontale présentant successivement un plan (56), une rampe d'engagement montante (57) et une partie arrondie terminée vers le bas par un ergot de blocage (59).

12. Clip de fixation selon la revendication 9 **caractérisé en ce que** les branches externes de pivotement (49) et (50) présentent chacune à leur extrémité libre une saillie latérale cylindrique respectivement (51) et (52) venant s'engager dans les moyens de palier.

13. Clip de fixation selon la revendication 8 **caractérisé en ce que** les moyens de palier sont deux plots (45) et (46) conformés en relief dans la platine d'étanchéité (37), les plots présentant chacun un évidement récepteur dans lequel vient s'engager une des saillies latérales cylindriques (51) ou (52) à l'extrémité de chacune des branches de pivotement (49) et (50).

14. Clip de fixation selon la revendication 4 **caractérisé en ce que** l'élément d'accrochage (22) présente une tête creuse (23) entourée partiellement par une bordure supérieure.

15. Clip de fixation selon la revendication précédente **caractérisé en ce que** la tête creuse (23) présente sur ses flancs à sa naissance et en sous-face de son rebord supérieur une conformation en deux successions (60) et (64) de rampes inférieures et supérieures.

16. Clip de fixation selon la revendication 15 **caractérisé en ce que** la succession inférieure (60) de rampes se compose d'une rampe montante (61) et d'un plat (62).

17. Clip de fixation selon la revendication 15 **caractérisé en ce que** la succession supérieure (64) de rampes se compose d'une rampe de descendante (65), d'un plat (66) et d'une rampe montante (67).

18. Clip de fixation selon l'une quelconque des revendications de 15 à 17 **caractérisé en ce que** dans chaque espace situé entre les rampes inférieure (60) et supérieure (64) vient s'engager un des bords longitudinaux de la partie étroite de l'ouverture de montage (12).

19. Clip de fixation selon les revendications 1 et 4 **caractérisé en ce que** la tête creuse (23) de l'élément d'accrochage (22) présente à l'avant en partie inférieure une saillie frontale (68) de butée de petites dimensions servant de butée en position finale de la baguette plaquée contre la carrosserie et formant avec la partie basse du front avant un coin de calage (69).

20. Clip de fixation selon l'une quelconque des revendications précédentes **caractérisé en ce que** la platine d'étanchéité (37) est de forme sensiblement ovale ou rectangulaire et présente un rebord périphérique remontant (39) dirigé vers l'ouverture de montage (12).

21. Clip de fixation selon l'une quelconque des revendications précédentes **caractérisé en ce que** la tête de clip (23) présente une bordure supérieure (63) bordant l'ouverture supérieure de l'évidement (47) formée de deux branches latérales (70) et (71) réunies à l'avant par une portion centrale incurvée (72) et présente une forme générale dite en « U couché ».

22. Clip de fixation selon l'une quelconque des revendications précédentes **caractérisé en ce qu'**il est réalisé en une matière plastique à base de polyamide ou renforcée par des fibres de verre.

23. Clip de fixation selon l'une quelconque des revendications précédentes **caractérisé en ce qu'**il est réalisé en une matière plastique contenant un additif lui conférant une conductivité suffisante pour la réalisation des étapes de peinture électrostatique.

24. Elément linéaire (2) décoratif ou fonctionnel, par exemple du type baguette, bande, moulure, enjoliveur de ceinture de caisse ou de bas de caisse, destiné à être rapporté contre et monté sur un support (5), et plus particulièrement la carrosserie (6) d'un véhicule routier notamment du type automobile, **caractérisé en ce qu'**il comporte sur sa face intérieure (4) au moins un clip de fixation (11) à deux positions de maintien selon l'une quelconque des revendications précédentes.

25. Elément linéaire (2) selon la revendication précédente **caractérisé en ce qu'**il comporte en outre au moins un dispositif de fixation longitudinale de sécurité.

26. Elément linéaire (2) selon la revendication 24 ou 25 **caractérisé par** un montage primaire par coulissement selon X et par une fixation définitive par une poussée selon Y.

## Claims

1. Attachment clip for ensuring the fastening on a support, and more particularly on the bodywork (6) of a road vehicle, in particular of an automobile to be treated by cataphoresis, of a functional and/or decorative linear element, for instance a stick (2), band, rod, bodyside or underbody decorative trim, the attachment clip (11) comprising a base piece (21) and a hooking element (22) destined to be mounted on the base piece (21),
the hooking element (22) including a protruding hooking structure, called clip head (23), conceived to co-operate with an assembly opening (12) of the « keyhole » type presenting a large part and a narrow part, realized opposite each other in the bodywork, and the linear element or the rod (2) being mobile between a pre-assembly position, spaced from the bodywork, for its treatment by cataphoresis, and a flattened position against the bodywork corresponding to its final position of use, the attachment clip (11) including furthermore a sealing plate (37) to block up the assembly opening (12) when the linear element or rod (2) is in final position of use, the attachment clip (12) being **characterized in that**:
the hooking element (22) is mounted tilting in relation to the base piece (21) between two stable positions, determined by locking means, and presents wedging means in the assembly opening (12),
the base piece (21), mounted longitudinally displaceable on one or more rail structures of the inner face of the linear element, includes:
- two retaining means, each in one of the stable positions of the linear element,
- a bearing means housing, in rotation, the axis or the ends of the swinging axis of the hooking element (22).

2. Attachment clip according to claim 1 **characterized in that** the base piece (21) includes an elastic abutting structure (32), leaning on the rail and against a stop (17) or (18) for displacement on the rails of the rod for a freedom of movement on these rails in order to automatically adjust the position of the clip in relation to the position of the lateral edges of each opening, whoch position is variable according to tolerance.

3. Attachment clip according to the previous claim **characterized in that** the elastic abutting structure (32) includes two flexible branches (33) and (34) in one piece with an extension of the lower part of the base piece (21), the free end (35) and (36) of each flexible branch being formed as a hook capable of leaning and sliding on the rail on one side, until stop by contact with the corresponding stop (17) or (18) on the rail and authorizing on the other side a pitch of spring of automatic adjustment to the exact position of one of the transverse edges of the assembly opening.

4. Attachment clip according to claim 1 **characterized in that** the hooking element (22) presents a hollow head (23) with a central hollow (47).

5. Attachment clip according to claims 1 and 4 **characterized in that** the locking means are realized by two flexible detent journals (40) and (41) placed on the base piece (21) and in the hollow head (23) of the hooking element (22), each with a detent structure cooperating with a homologous detent structure conformed in the wall of the hollow, each of the flexible detent journals corresponding to a stable position of the hooking element (22) and being in elastic return towards the wall of the hollow (47).

6. Attachment clip according to the previous claim **characterized in that** one of the detent journals (40) or (41) presents a bent edge in open form to which the wall leads that faces the hollow of the head (23) during the swinging movement of the hooking element between the two stable positions.

7. Attachment clip according to any of the preceding claims **characterized in that** the base piece (21) and the tilting hooking element (22) are two pieces cast separately.

8. Attachment clip according to any of the preceding claims **characterized in that** the base piece (21) consists of
a slider (24) formed by two tubular edges, inserted for sliding motion on the rail, and linked to each other by a material bridge
a sealing plate (37) in which the bearing means is conformed (44) that houses, in rotation, the swinging axis of the hooking element (22),
the two detent journals (40) and (41) which rise from the basis of the sealing plate (37)
a middle crest (31) linking the slider (24) to the elastic abutting structure (32).

9. Attachment clip according to claim 1 **characterized in that** the hooking element (22) presents a base (48) which proceeds in three branches, namely two external rotation branches (49) and (50), terminating by the rotation axis, and one anti-recoil middle branch (53).

10. Attachment clip according to the previous claim **characterized in that** the middle flexible anti-recoil branch (53) is raised.

11. Attachment clip according to claim 9 or 10 **characterized in that** the middle branch (53) presents an end (55) formed as a hook, with a frontal surface, presenting successively a plane (56), a rising insertion ramp (57) and a rounded part terminated downwards by a locking spur (59).

12. Attachment clip according to claim 9 **characterized in that** the external rotation branches (49) and (50) each present, at their free end, a cylindrical side protrusion (51) and (52) respectively that engages in the bearing means.

13. Attachment clip according to claim 8 **characterized in that** the bearing means are two contacts (45) and (46) conformed in relief in the sealing plate (37), the contacts each presenting a hollow housing in which one of the cylindrical side protrusions (51) or (52) at the end of each of the rotation branches (49) and (50) engages.

14. Attachment clip according to claim 4 **characterized in that** the hooking element (22) presents a hollow head (23), partially surrounded by an upper edge.

15. Attachment clip according to the previous claim **characterized in that** the hollow head (23) presents, on its sides, at its beginning and at the lower face of its upper edge, a conformation in two successions (60) and (64) of lower and upper ramps.

16. Attachment clip according to claim 15 **characterized in that** the lower succession (60) of ramps is made up of a rising ramp (61) and of a plate (62).

17. Attachment clip according to claim 15 **characterized in that** the upper succession (64) of ramps is made up of a descending ramp (65), of a plate (66) and of a rising ramp (67).

18. Attachment clip according to any of the claims 15 to 17 **characterized in that** in each space situated between the lower (60) and upper ramp (64) one of longitudinal edges of the narrow part of the assembly opening (12) engages.

19. Attachment clip according to claims 1 and 4 **characterized in that** the hollow head (23) of the hooking element (22) presents, in the front in the lower part, a frontal protrusion (68) for abutting, of small size, serving as stop in final position of the rod against the bodywork and forming, with the lower part of the front, a locking wedge (69).

20. Attachment clip according to any of the preceding claims **characterized in that** the sealing plate (37) is of essentially oval or rectangular form and presents a rising peripheral ledge (39) directed towards the assembly opening (12).

21. Attachment clip according to any of the preceding claims **characterized in that** the clip head (23) presents an upper edge (63) bordering the upper opening of the hollow (47), formed by two side branches (70) and (71) joined in the front by a bent central portion (72), and presents a general form of a so-called « horizontal U ».

22. Attachment clip according to any of the preceding claims **characterized in that** it is made of a plastic based on polyamide or reinforced by glass fibers.

23. Attachment clip according to any of the preceding claims **characterized in that** it is made of a plastic containing an additive which confers it a sufficient conductivity for the realisation of the electrostatic painting steps.

24. Functional or decorative linear Element (2), for instance of the type stick, band, rod, waistline or underbody decorative screen, destined to be drawn against and mounted on a support (5), and more particularly on the bodywork (6) of a road vehicle in particular an automobile, **characterized in that** it includes, on its inner face (4), at least one attachment clip (11) at two retaining positions according to any of the preceding claims.

25. Linear element (2) according to the previous claim **characterized in that** it furthermore includes at least one longitudinal security fastening device.

26. Linear element (2) according to claim 24 or 25 **characterized by** a primary assembly by sliding motion according to X and by a definitive fastening by a push according to Y.

## Patentansprüche

1. Clip zum Fixieren zur Befestigung auf einem Träger, genauer gesagt auf der Karosserie (6) eines Straßenfahrzeugs, vor allem eines mit Kataphorese zu behandelnden Personenkraftwagens, einer Zier- und/oder Funktionsleiste, zum Beispiel Stab (2), Band, Leiste, Zierblende für die Karosserie-Gürtellinie oder den Schwellenbereich, wobei der Clip zum Fixieren (11) ein Basisstück (21) und ein Ankupplungselement (22) aufweist, das auf dem Basisstück (21) zu montieren ist,
wobei das Ankupplungselement (22) eine überstehenden Ankupplungsstruktur aufweist, Clipkopf (23) genannt, der mit einer Montageöffnung (12) nach Art eines «Schlüssellochs» mit einem breiten Teil und einem engen Teil zusammenwirkt, die in der Karosserie einander gegenüberliegen, und wobei die Leiste oder der Stab (2) zwischen einer Vormontageposition, abgerückt von der Karosserie, für ihre Kataphoresebehandlung, und eine Position an der Karosserie entsprechend ihrer Benutzungsendlage beweglich ist, wobei der Clip zum Fixieren (II) außerdem eine Dichtmanschette (37) aufweist, die die Montageöffnung (12) abdeckt, wenn die Leiste oder der Stab (2) in Benutzungsendlage ist, wobei der Clip zum Fixieren (12) **dadurch gekennzeichnet ist, dass** :
. das Ankupplungselement (22) im Vergleich zu dem Basisstück (21) zwischen zwei stabilen Positionen kippbar montiert ist, die durch Verriegelungsmittel festgelegt sind, und Keilverbindungsmittel in der Montageöffnung (12) aufweist,
. das Basisstück (21), das in Längsrichtung verschiebbar auf eine oder mehrere Schienenstrukturen der Innenseite der Leiste montiert ist, folgendes umfasst :
- zwei Halteelemente, jedes in einer der stabilen Positionen der Leiste,
- ein Lagermittel, das drehend die Achse oder die Kipp-Achsenden des Ankupplungselements (22) aufnimmt.

2. Clip zum Fixieren nach Anspruch 1, **gekennzeichnet dadurch, dass** das Basisstück (21) eine elastische Anschlagstruktur (32) umfasst, die auf der Schiene aufliegt, wie auch gegen einen Anschlag (17) oder (18) zur Bewegung auf den Schienen des Stabes für eine Bewegungsfreiheit auf diesen Schienen, um die Position des Clips automatisch an die Position der seitlichen Ränder jeder Öffnung anzupassen, die je nach der erlaubten Toleranz variiert.

3. Clip zum Fixieren nach dem vorherigen Anspruch, **gekennzeichnet dadurch, dass** die elastische Anschlagstruktur (32) zwei flexible Zweige (33) und (34) umfasst, einstückig mit einer Verlängerung des Unterteils des Basisstückes (21), wobei das freie Ende (35) und (36) jedes flexiblen Zweigs hakenförmig ist und auf der Schiene aufliegt und auf einer Seite gleitet, bis zum Halt durch Kontakt mit dem entsprechenden Anschlag (17) oder (18) auf der Schiene, und auf der anderen Seite einen Federweg zur automatischen Ausrichtung auf die exakte Position eines der Querränder der Montageöffnung zulässt.

4. Clip zum Fixieren nach Anspruch 1, **gekennzeichnet dadurch, dass** das Ankupplungselement (22) einen hohlen Kopf (23) mit zentraler Aushöhlung (47) aufweist.

5. Clip zum Fixieren nach den Ansprüchen 1 und 4, **gekennzeichnet dadurch, dass** die Verriegelungsmittel aus zwei flexiblen Rastzapfen (40) und (41) bestehen, gelegen auf dem Basisstück (21) und in dem hohlen Kopf (23) des Ankupplungselements (22), jeder mit einer Raststruktur, die mit einer entsprechenden Raststruktur in der Wand der Aushöhlung zusammenwirkt, wobei jeder der flexible Rastzapfen einer stabilen Position des Ankupplungselements (22) entspricht, mit elastischer Rückstellkraft zur Wand der Aushöhlung (47).

6. Clip zum Fixieren nach dem vorherigen Anspruch, **gekennzeichnet dadurch, dass** einer der Rastzapfen (40) oder (41) eine gebogene Kante in offener Form aufweist, auf die die Wand gegenüber der Aushöhlung des Kopfes (23) bei der Kippbewegung des Ankupplungselements zwischen den beiden stabilen Positionen zuläuft.

7. Clip zum Fixieren nach einem beliebigen der vorherigen Ansprüche, **gekennzeichnet dadurch, dass** das Basisstück (21) und das kippbare Ankupplungselement (22) zwei gesondert gestaltete Stücke sind.

8. Clip zum Fixieren nach einem beliebigen der vorherigen Ansprüche, **gekennzeichnet dadurch, dass** das Basisstück (21) aus folgendem besteht:
einem Schieber (24), gebildet aus zwei auf der Schiene gleitenden rohrförmigen Rändern, die miteinander durch eine Brücke verbunden sind
einer Dichtmanschette (37), in der das Lagermittel (44) gebildet ist, das drehend die Kippachse des Ankupplungselements (22) aufnimmt,
den beiden Rastzapfen (40) und (41), die sich vom Boden der Dichtmanschette (37) erheben
einer mittleren Kante (31), die den Schieber (24) mit der elastischen Anschlagstruktur (32) verbindet.

9. Clip zum Fixieren nach Anspruch 1, **gekennzeichnet dadurch, dass** das Ankupplungselement (22) eine Basis (48) aufweist, die sich in drei Zweige fortsetzt, von denen zwei äußere Drehzweige (49) und (50) mit der Drehachse enden, sowie ein mittlerer Anti-Rückschlagzweig (53).

10. Clip zum Fixieren nach dem vorherigen Anspruch, **gekennzeichnet dadurch, dass** der mittlere flexible Anti-Rückschlag-Zweig (53) hoch liegt.

11. Clip zum Fixieren nach Anspruch 9 oder 10, **gekennzeichnet dadurch, dass** der mittlere Zweig (53) ein hakenförmiges Ende (55) mit frontaler Oberfläche mit, in dieser Reihenfolge, einer Ebene (56), einer ansteigenden Einführungsrampe (57) und einem abgerundeten Teil aufweist, das nach unten in einer Sperrnase (59) endet.

12. Clip zum Fixieren nach Anspruch 9, **gekennzeichnet dadurch, dass** die äußeren Drehzweige (49) und (50) jeweils an ihrem freien Ende einen zylindrischen seitlichen Vorsprung (51) bzw. (52) aufweisen, der in die Lagermittel eingreift.

13. Clip zum Fixieren nach Anspruch 8, **gekennzeichnet dadurch, dass** die Lagermittel zwei Kontakte (45) und (46) sind, die reliefartig in der Dichtmanschette (37) ausgebildet sind und jeweils eine Aufnahme-Aushöhlung aufweisen, in die einer der zylindrischen seitlichen Vorsprünge (51) oder (52) an dem Ende jedes der Drehzweige (49) und (50) eingreift.

14. Clip zum Fixieren nach Anspruch 4, **gekennzeichnet dadurch, dass** das Ankupplungselement (22) einen hohlen Kopf (23) aufweist, der teilweise von einem oberen Rand umgeben ist.

15. Clip zum Fixieren nach dem vorherigen Anspruch, **gekennzeichnet dadurch, dass** der hohle Kopf (23) an seinen Flanken, an seinem Anfangspunkt und an der Unterseite seines oberen Rands zwei Reihen von unteren und oberen Rampen (60) und (64) aufweist.

16. Clip zum Fixieren nach Anspruch 15, **gekennzeichnet dadurch, dass** die untere Reihe (60) von Rampen aus einer ansteigenden Rampe (61) und einer Platte (62) besteht.

17. Clip zum Fixieren nach Anspruch 15, **gekennzeichnet dadurch, dass** die obere Reihe (64) von Rampen aus einer absteigenden Rampe (65), einer Platte (66) und einer ansteigenden Rampe (67) besteht.

18. Clip zum Fixieren nach einem beliebigen der Patentansprüche 15 bis 17, **gekennzeichnet dadurch, dass** in jeden Raum zwischen der niedrigeren (60) und der oberen Rampe (64) einer der Längsränder des engen Teils der Montageöffnung (12) eingreift.

19. Clip zum Fixieren nach den Ansprüchen 1 und 4, **gekennzeichnet dadurch, dass** der hohle Kopf (23) des Ankupplungselements (22) vorn im unteren Teil einen frontalen Vorsprung (68) als Anschlag von kleinen Ausmaßen aufweist, der als Anschlag in Endlage des Stabes gegen die Karosserie dient und mit dem unteren Teil der Vorderfront einen Feststellkeil (69) bildet.

20. Clip zum Fixieren nach einem beliebigen der vorherigen Ansprüche, **gekennzeichnet dadurch, dass** die Dichtmanschette (37) im wesentlichen oval oder rechteckige ist und einen ansteigenden peripheren Rand (39) aufweist, der zu der Montageöffnung (12) hin gerichtet ist.

21. Clip zum Fixieren nach einem beliebigen der vorherigen Ansprüche, **gekennzeichnet dadurch, dass** der Clipkopf (23) einen oberen Rand (63) aufweist, der die obere Öffnung der Aushöhlung (47) umgibt, gebildet von zwei seitlichen Zweigen (70) und (71), die vorn durch einen gebogenen Mittelteil (72) verbunden sind, und eine allgemeine Form genannt « liegendes U» aufweist.

22. Clip zum Fixieren nach einem beliebigen der vorherigen Ansprüche, **gekennzeichnet dadurch, dass** er aus einem Kunststoff auf Polyamidbasis oder mit Glasfasern verstärkt ist.

23. Clip zum Fixieren nach einem beliebigen der vorherigen Ansprüche, **gekennzeichnet dadurch, dass** er aus einem Kunststoff ist, der einen Zusatzstoff enthält, der ihm eine ausreichende Leitfähigkeit zur Durchführung der elektrostatischen Lackierphasen verleiht.

24. Zier- oder Funktionsleiste (2), zum Beispiel Stab, Band, Leiste, Zierblende für die Karosserie-Gürtellinie oder den Schwellenbereich, um gegen den Träger (5) gezogen und darauf montiert zu werden, genauer gesagt auf die Karosserie (6) eines Straßenfahrzeugs, vor allem eines Personenkraftwagens, **gekennzeichnet dadurch, dass** sie auf ihrer Innenseite (4) mindestens einen Clip zum Fixieren (11) an zwei Haltepositionen nach einem beliebigen der vorherigen Ansprüche umfasst.

25. Zierleiste (2) nach dem vorherigen Anspruch, **gekennzeichnet dadurch, dass** sie außerdem mindestens eine Sicherheits-Längsbefestigungsvorrichtung umfasst.

26. Zierleiste (2) nach Anspruch 24 oder 25, **gekennzeichnet durch** eine Rohbaumontage **durch** Gleiten nach X und **durch** eine endgültige Befestigung **durch** einen Schub nach Y.
